Europäisches Patentamt

European Patent Office

Office européen des brevets

(11) Publication number: **0 364 203**
**A1**

## (12) EUROPEAN PATENT APPLICATION

(21) Application number: **89310330.9**

(22) Date of filing: **10.10.89**

(51) Int. Cl.⁵: **G01N 21/17 , B01L 3/02**

(30) Priority: **10.10.88 IE .3220/89**

(43) Date of publication of application:
**18.04.90 Bulletin 90/16**

(84) Designated Contracting States:
**AT BE CH DE ES FR GB GR IT LI LU NL SE**

(71) Applicant: **PHYBER HOLDINGS LIMITED**
**53 Burrin Street**
**Carlow(IE)**

(72) Inventor: **McMillan, Norman, Dr.**
**White Butts Killeshin Road**
**Graiguecullen Carlow(IE)**

(74) Representative: **Bridge-Butler, Alan James et al**
**G.F. REDFERN & CO. High Holborn House**
**52/54 High Holborn**
**London WC1V 6RL(GB)**

(54) **A liquid drop forming device.**

(57) A liquid drop forming device (10) for a liquid drop analyser (1) has a body member (21) with a conical drop supporting surface (22). Ducts (25) are provided in the body member (21) for delivery of discrete quantities of a sample liquid from a syringe (26) to the drop supporting surface (22) to form a pendant drop (27) at the drop supporting surface (22). Radiation guides (2, 3) are mounted on the body member (21) and comprise optical fibres forming a delivery guide (2) to deliver a radiation signal from the analyser (1) to the drop (27) and a receiver guide (3) to collect radiation from the drop (27) and return an output signal to a detector circuit (28) of the analyser (1).

Means may be provided to apply a stimulus such as vibrations to the drop (27).

Fig.1

This invention relates to a liquid drop analyser and in particular to a drop forming device for such an instrument.

A particularly suitable form of liquid drop analyser is described in Irish Patent Application No. 947/87, filed in the name of the inventor of the present Application, Norman McMillan, which describes an apparatus for measuring a property of a liquid comprising at least one guide for electromagnetic radiation, means for directing electromagnetic radiation into the guide, means for providing at least one drop of liquid in contact with the guide at a position where radiation from the guide can enter the drop and means for deriving a signal which is a function of the interaction of the radiation with the liquid of the drop.

The properties that may be measured include inter alia a wide range of physical, chemical, electrical, opto-acoustical and other properties of a liquid either singly of in combination with other liquids. These include, for example, the refractive index, surface tension, viscosity, fluorescence etc.

According to the invention there is provided a liquid drop forming device for a liquid drop analyser, comprising a body member, means to deliver discrete quantities of liquid to a liquid drop supporting surface on the body member to form a pendant drop and at least one radiation guide mounted on the body member, an end of the guide terminating adjacent the drop supporting surface.

The term radiation as used in this specification is taken to include electromagnetic radiation and ultrasonic radiation.

The invention will be more clearly understood from the following description of some preferred embodiments thereof, given by way of example only, with reference to the accompanying drawings in which:

Fig. 1 is a schematic diagram of liquid drop analyser which could incorporate the drop forming device according to the present invention,

Fig. 2 is a cross-sectional view of a drop forming device according to the invention,

Fig. 3 is a side view showing the drop forming device of Fig. 2 with a pendant drop,

Figs. 4 and 5 are typical cross-sectional views of alternative drop forming devices according to the invention,

Fig. 6(a) and (b) are typical readout signal traces achieved with the liquid drop analyser such as illustrated in Fig. 1,

Figs. 7 to 20 (inclusive) are typical side or cross-sectional views of other constructions of drop forming device according to the invention.

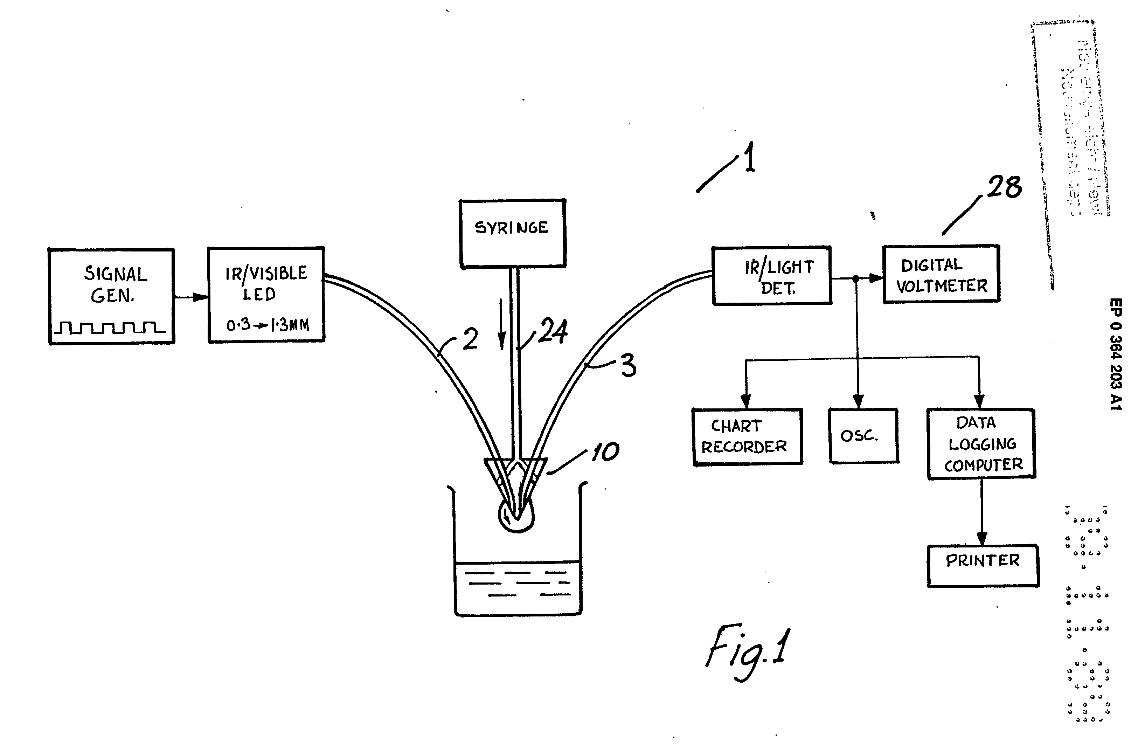

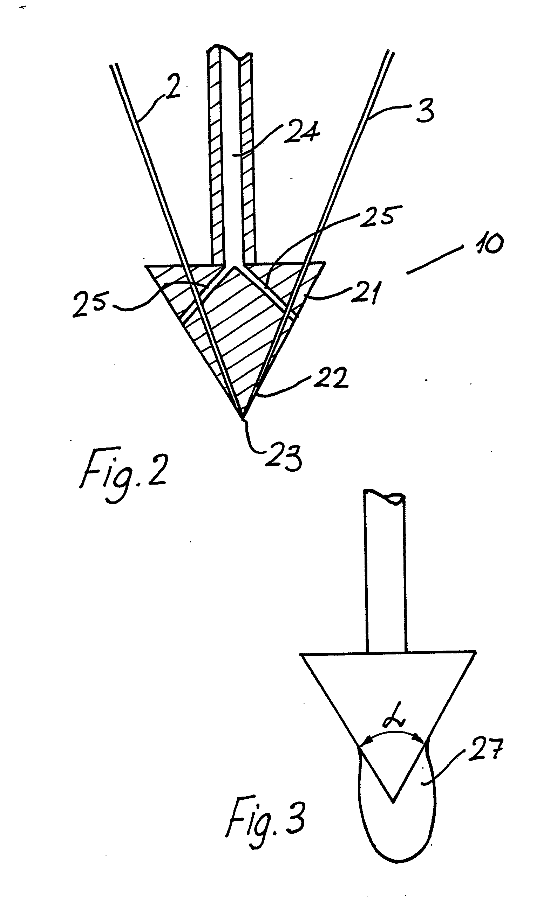

Referring to the drawings and initially to Figs. 1 to 3 thereof, there is illustrated a liquid drop analyser indicated generally by the reference numeral 1. Two radiation guides namely a delivery guide 2 and a receiver guide 3, in this embodiment formed by optical fibres, are mounted within a drop forming device, indicated generally by the reference numeral 10. The drop forming device 10 comprises a cone shaped body member 21 having a conical outer surface 22 terminating in a sharp apex 23, a sample liquid supply pipe 24 feeds liquid through internal ducts 25 onto the conical outer surface 22 from a syringe 26 to the drop forming device 10. The body 21 has a cone angle alpha (see Fig. 3) which is preferably in the range 45° to 70°. An alpha angle of 62° has been found particularly suitable. This cone angle must be chosen so that the angle of contact between the liquid and the surface of the cone is the same, that all drops forming on a cone of a given angle are similar in shape at the unstable stage immediately before they drop off the cone. The condition of constant contact angle is of course achieved in practice by ensuring that the angle is zero, i.e. that the liquid wets the tip of the cone. Thus, the cone angle will vary depending on the liquid being tested. However, it is only necessary to have the cone angle approximately correct. An advantage of forming a drop with a zero contact angle between the drop and the support surface is that in the measurement of drop times, drop weight, drop volumes or whatever other methods of analysis are used the corrections which are associated with other drop support systems such as the bare fibres themselves are not necessary.

In use, in the liquid drop analyser 1 illustrated the radiation used is light and the sample liquid from the syringe 26 is delivered through the supply pipe 24 and ducts 25 onto the conical surface 22. Liquid travels down the conical surface 22 to form a drop indicated by the reference numeral 27 in Fig. 3. Light is delivered through the delivery guide 2 and from the drop 27 to the receiver guide 3 to a detector circuit 28 of the liquid drop analyser 1.

In some of the drawings hereinafter various portions such as the radiation guides are often omitted for clarity. It will be appreciated that they must be incorporated in each body member.

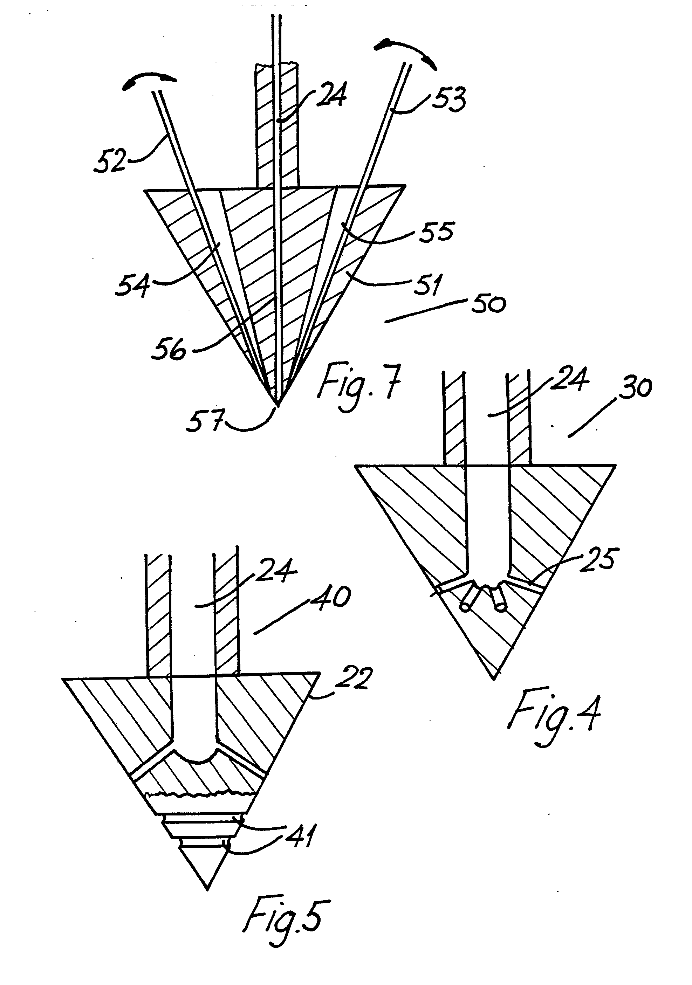

Referring to Fig. 4 there is illustrated an alternative construction of drop forming device indicated generally by the reference numeral 30 in which parts similar to those described with reference to the previous drawings are identified by the same reference numerals. In this embodiment there is a plurality of radially arranged ducts 25.

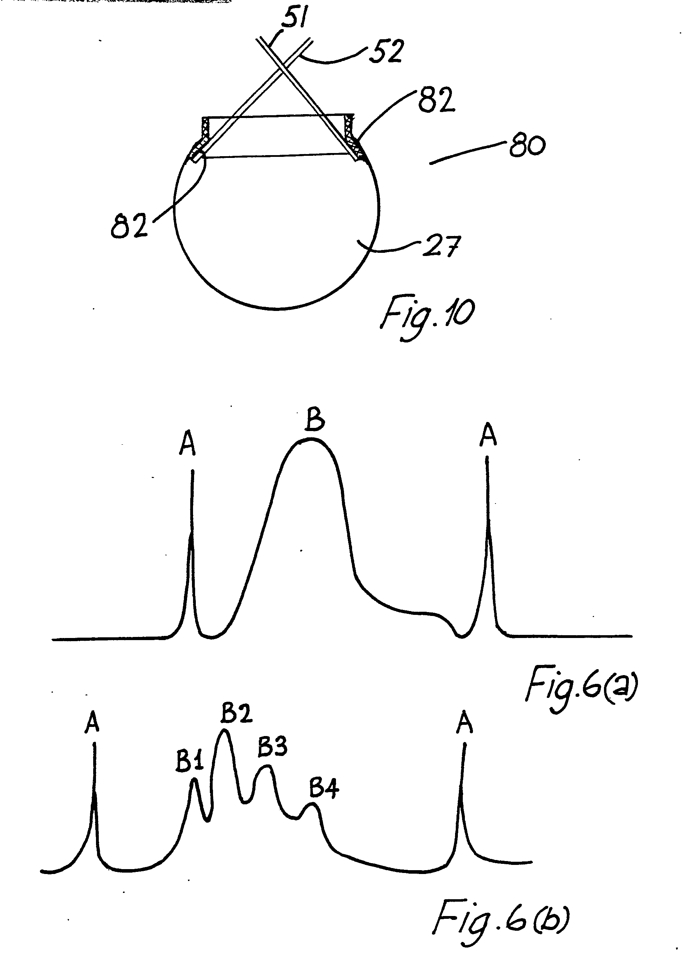

Referring to Fig. 5 there is illustrated an alternative construction of drop forming device indicated generally by the reference numeral 40 and again parts similar to those described with reference to the previous drawings are identified by the same reference numerals. In this embodiment a plurality of circular grooves 41 are provided in the conical outer surface 22 for distribution of liquid around the body member 21. The grooves 41 cause liquid delivered down the conical surface 22 from the ducts 25 to coalesce into a ring and the ring of liquid then feeds the drop 27 being formed at the apex 23 in a more uniform and satisfactory manner.

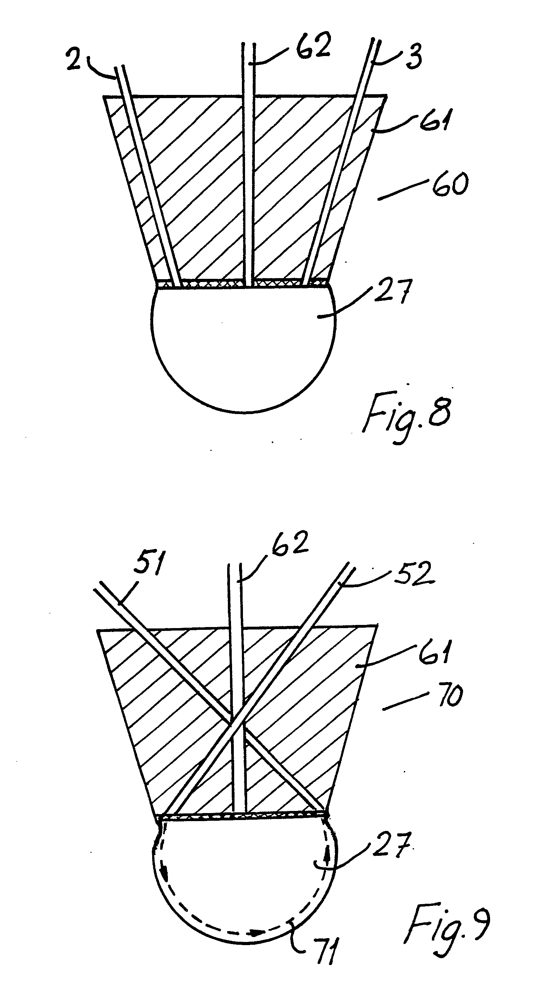

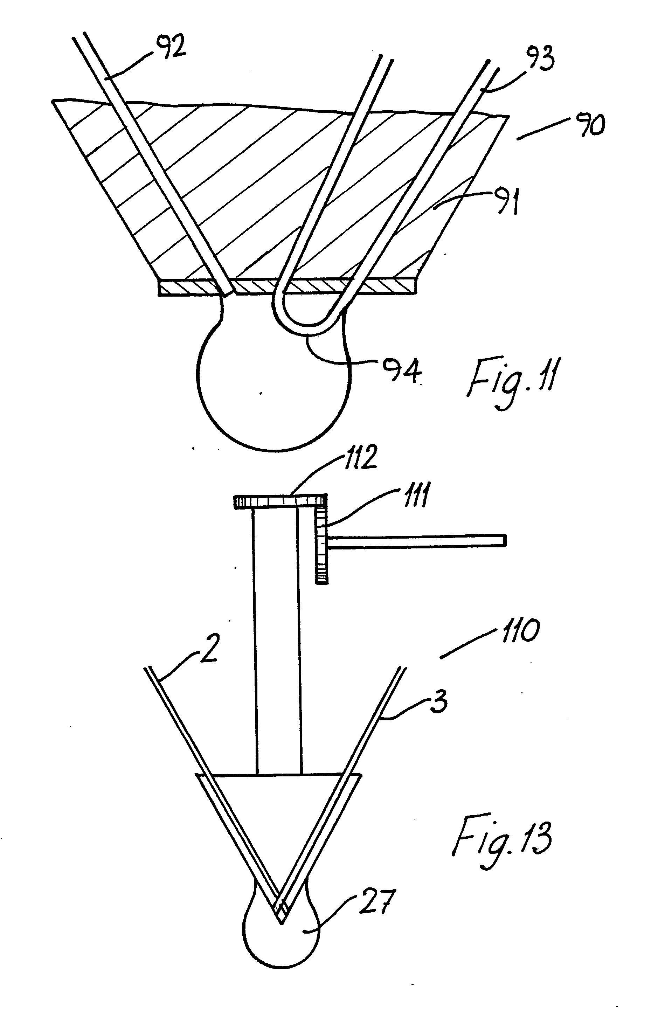

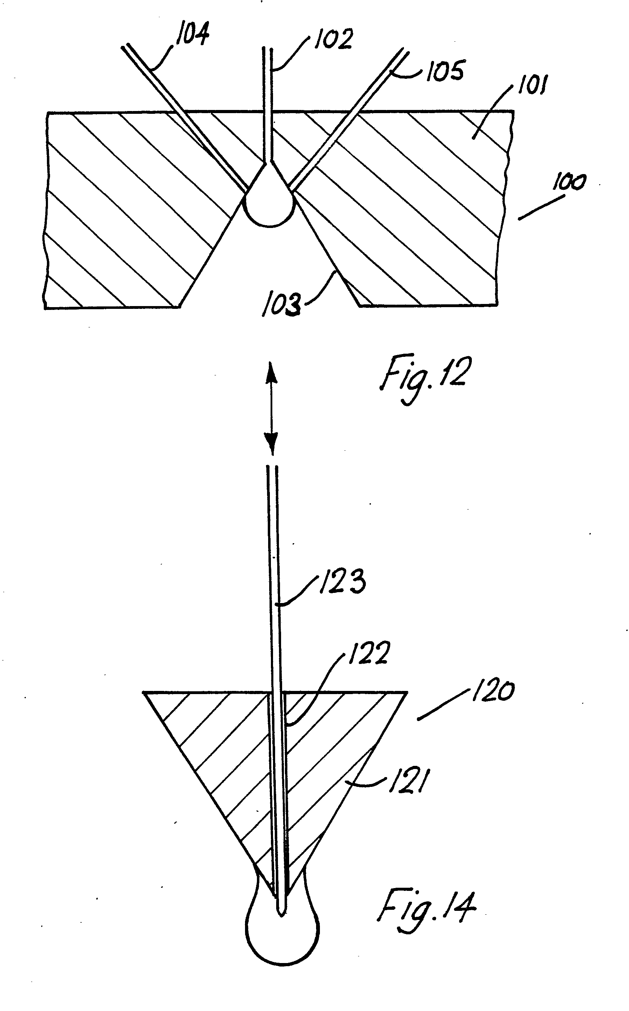

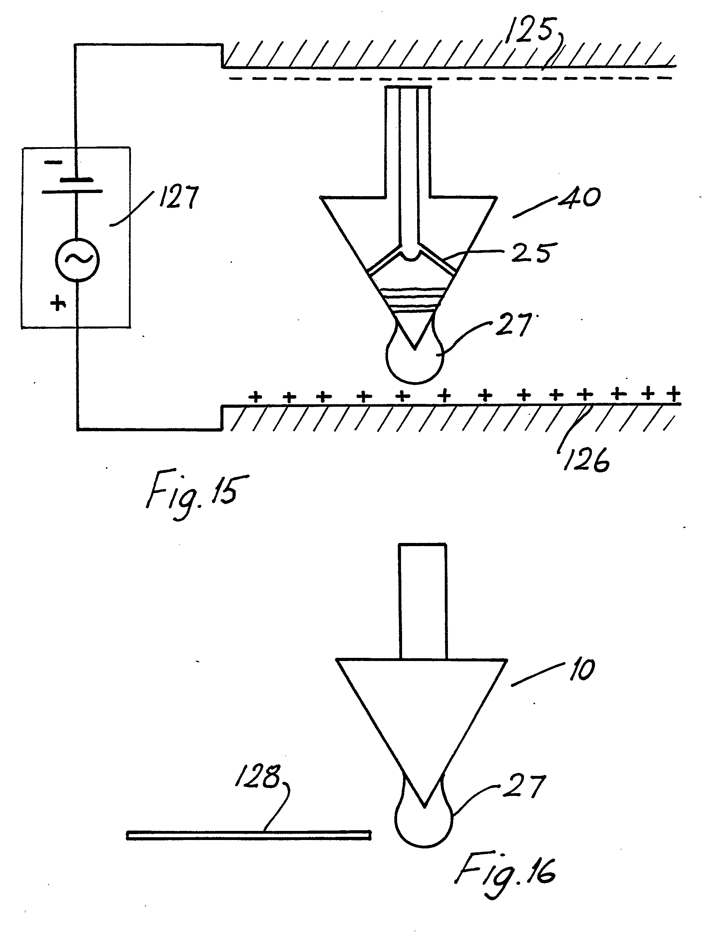

It will be appreciated that the signal derived from the liquid drop analyser 1 is a signal which has been reflected within the pendant drop 27 and can be a signal with a multiplicity of reflections. In some cases light is not reflected at the surface of the drop but may be absorbed within the drop, for example, by a fluorescent material which subsequently emits light and this emitted light is picked up by the receiver guide 3. Further, the light signal may in some cases be reflected from particulate material within the drop. Fig. 6(a) illustrates a typical signal derived, the two pulses A being the pulse received as the drop is fully formed and falls and the intermediate signal B is the signal that is achieved as the drop is being formed. In many instances it may be necessary to separate the signals into those occurring when there are three reflections, four reflections and so on within the drop 27. A typical signal trace derived in this case is shown in Fig. 6(b). The peaks B1, B2, B3 and B4 correspond to the signals received after one, two, three and four reflections respectively within the drop. This signal trace may be achieved by the use of a drop forming device illustrated in Fig. 7 and identified by the reference numeral 50, having a conical body member 51. In this case a pair of radiation guides 52 and 53 are provided within sockets 54 and 55 respectively. The radiation guides 52 and 53 can thus be adjustably mounted on the body member 51 for variation of the angle at which radiation is delivered into or collected from a pendant drop. In this particular drop forming device 50 the supply pipe 24 delivers to an inline central bore 56 exiting at the lowermost portion of the body member 51 at 57. This particular construction of bore 56 has been found particularly suitable as a drop is formed in the best possible position for regular controlled formation.

Referring to Fig. 8 there is illustrated a drop forming device indicated generally by the reference numeral 60 having a body member 61 of frustro-conical shape. The frustro-conical shape is of no particular significance. The body member 61 terminates in a flat surface 62 into which projects the radiation guides 2 and 3 and a central supply pipe 63.

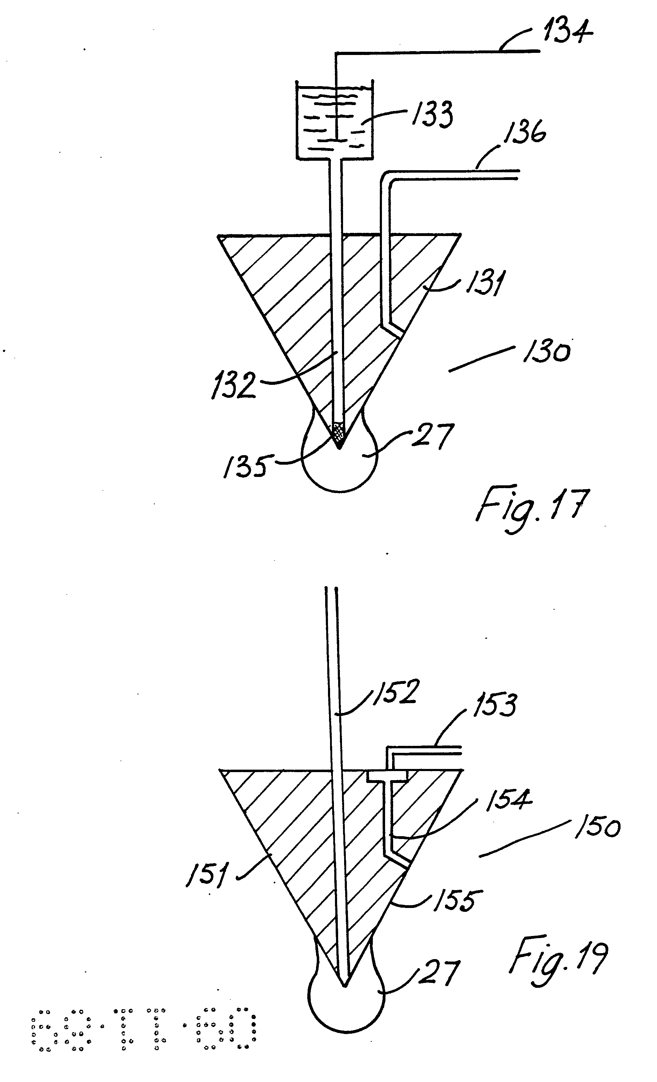

Referring to Fig. 9 there is illustrated a further drop forming device indicated generally by the reference numeral 70 in which parts similar to those described with reference to Fig. 8 are identified by the same reference numerals. In this embodiment, the radiation guides 2, 3 diverge for transmission and collection of radiation adjacent an inner surface of a pendant drop 27. The path travelled by light through the drop 27 is indicated by the broken line 71. The advantage of this arrangement of radiation guides 2,3 is that information on conditions at the surface of a drop can be collected. It will be appreciated that this type of arrangement of the radiation guides may be incorporated in the conical drop forming devices described previously.

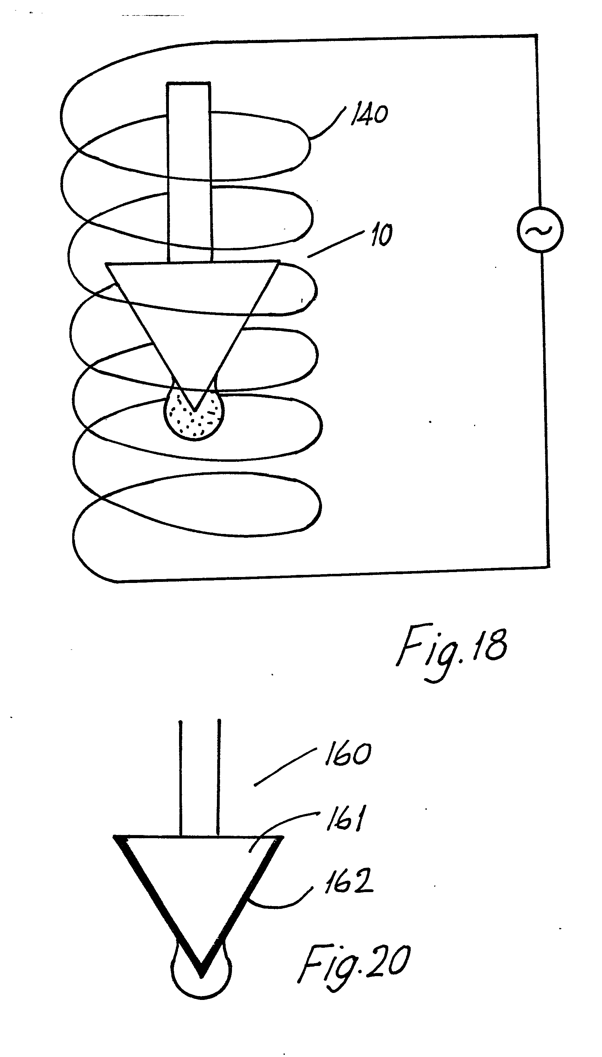

Referring to Fig. 10 there is illustrated portion of a drop forming device indicated generally by the reference numeral 80 with a body member 81 formed by a ring with an inner drop supporting surface 82. Again parts similar to those described with reference to the previous drawings are identified by the same reference numerals.

Referring to Fig. 11 there is illustrated an alternative construction of drop forming device indicated generally by the reference numeral 90 having a body member 91 in which is mounted a delivery radiation guide 92 formed from an optical fibre and a receiver radiation guide 93 formed from an optical fibre having a looped end 94 projecting out of the body member 91. This looped end 94 has its cladding or external coating removed to pick up or emit signals in the drop. Both ends of the receiver radiation guide 93 may be coupled one to a light source and one to a detector. Alternatively, both ends may be connected to separate detectors. In this case a different signal would be picked up by each detector and a differential detection system based on a comparison of the signals in each detector may in some cases be advantageous. It will also be appreciated that you can get light to couple into or out of the fibre at the point where the cladding has been removed, such light is associated with the evanescent wave. This, it will be appreciated, is the wave which in an ordinary fibre will travel in the cladding and not in the core. In certain measurements it may be advantageous to collect such light.

Referring now to Fig. 12, heretofore the drop forming devices have all been illustrated for liquids that have angles of contact less than 90° however, there are a number of liquids that have angles of contact greater than 90° and in such instances there is provided a drop forming device indicated generally by the reference numeral 100 having a body member 101 with supply pipe 102 delivering to an inverted conical hole 103 into which also feeds radiation guides 104 and 105.

In many instances, it is necessary to provide external stimulation to a pendant drop, for example, in Fig. 13 there is illustrated a drop forming device indicated generally by the reference numeral 110 which is rotatable by gearing 111 and 112, parts similar to those described with reference to the previous drawings are identified by the same reference numerals.

In many instances it is necessary to provide vibration to a drop and a suitable embodiment which enables this to be done is illustrated in Fig. 14 in which there is a drop forming device indicated generally by the reference numeral 120 having a body member 121 with a central bore 122 for reception of a vibrator rod 123. It will be appreciated that many other alternative arrangements for vibrating the drop are possible.

In some cases it is necessary to apply an electric field to the drop forming device. Referring to Fig. 15 there is illustrated the drop forming device 40 of Fig. 5 mounted between a pair of capacitor plates 125 and 126 powered by either AC or DC current from a power source 127.

Fig. 16 illustrates the drop forming device 10 of Figs. 2 and 3 having a high tension rod 128 for bombarding the pendant drop 27 with electrons to charge the drop 27.

Referring to Fig. 17 there is illustrated a drop forming device indicated generally by the reference numeral 130 having a body member 131. The body member 131 has a central bore 132 fed from an electrolyte storage tank 133 in which is mounted an electrode 134. At the bottom of the bore 132 is a porous plug 135. A liquid supply pipe 136 is provided. The electrode 134 allows a drop 27 to be charged with ions which produce changes in the shape of the drop 27 which can be used for measurement of various properties such as electrochemical properties of the sample liquid.

Referring to Fig. 18 there is illustrated the drop forming device 10 mounted within a solenoid 140 to provide a magnetic field. It will be appreciated the application of a magnetic field to a liquid which is either itself magnetic or contains magnetic particulate matter will be advantageous.

Referring to Fig. 19 there is illustrated a drop forming device indicated generally by the reference numeral 150 having a body member 151 and a central supply pipe 152 similar to those previously described for forming the pendant drop 27. In this embodiment, there is provided a secondary liquid feed 153 which delivers through a bore 154 to the outer conical surface 155 of the body member 151. This secondary liquid feed is provided to deliver discrete quantities of, for example, surface active liquid to the liquid drop 27, obviously subsequent to that liquid drop 27 having been at least partially formed.

In many cases it is advantageous to apply s surface coating to the drop supporting surface, particularly for studying the interaction of solid surfaces with liquids. Such surface coatings include inter alia but not exclusively molecular coatings, ions or electric charge for example. Referring to Fig. 20 there is illustrated an alternative construction of drop forming device indicated generally by the reference numeral 160 having a body member 161 substantially similar to many of the body members hereinbefore described in which the outer conical surface is covered by a molecular coating 162. This would typically be a mono-layer of molecules such as a Langmuir-Blodgett film.

It will be appreciated that in the various embodiments of drop forming devices described herein, two radiation guides are mounted on the body member. However, any desired number of radiation guides may be provided, one being the essential minimum. Further, in some cases one or more guides for ultrasonic radiation may be provided on the body member in addition to or instead of the guides for electromagnetic radiation such as light.

It is not the purpose of this specification to lay out the type of test that may be carried out with typical liquid drop analysers and in particular the liquid drop analysers described in other patent specifications by us. The purpose of this specification is to describe and claim the construction of drop forming device.

## Claims

1. A liquid drop forming device for a liquid drop analyser, comprising a body member, means to deliver discrete quantities of liquid to a liquid drop supporting surface on the body member to form a pendant drop and at least one radiation guide mounted on the body member, an end of the guide terminating adjacent the drop supporting surface.

2. A liquid drop forming device as claimed in Claim 1 wherein two radiation guides are provided namely, a delivery guide to deliver radiation to the drop and a receiver guide to collect radiation from the drop.

3. A liquid drop forming device as claimed in Claim 2 wherein the radiation guides diverge for transmission and collection of radiation adjacent an inner surface of a pendant drop.

4. A liquid drop forming device as claimed in Claim 2 or 3 wherein the guides are adjustably mounted on the body member for variation of the angle at which radiation is delivered into or collected from a pendant drop.

5. A liquid drop forming device as claimed in any preceding claim wherein each radiation guide is an optical fibre.

6. A liquid drop forming device as claimed in Claim 5 in which an optical fibre projects out of the body member to lie, in use, exposed within a pendant drop and in which the exposed portion of the optical fibre has its external coating removed.

7. A liquid drop forming device as claimed in any preceding claim wherein the drop supporting surface is substantially flat.

8. A liquid drop forming device as claimed in any of Claims 1 to 6 wherein the drop supporting surface is a tapered surface.

9. A liquid drop forming device as claimed in Claim 8 wherein the drop supporting surface is conical.

10. A liquid drop forming device as claimed in Claim 9 wherein the cone angle is determined by the nature of the liquid being analysed and is such as to have substantially zero contact angle between the drop and the conical surface.

11. A liquid drop forming device as claimed in any of Claims 1 to 6 wherein the drop supporting surface is formed by a ring.

12. A liquid drop forming device as claimed in any preceding claim wherein the liquid is delivered by a through-hole in the body member.

13. A liquid drop forming device as claimed in Claim 12 wherein the hole forms a central bore exiting at the lowermost portion of the body member.

14. A liquid drop forming device as claimed in Claim 12 wherein the hole communicates with an outer surface of the body member at a position on the body member remote from the drop support surface for delivery of liquid along the outer surface of the body member to the drop support surface.

15. A liquid drop forming device as claimed in Claim 9 and 14 wherein one or more circular grooves extend around the outer surface of the body member above the conical drop support surface for distribution of liquid around the body member.

16. A liquid drop forming device as claimed in any preceding claim in which a secondary liquid feed is provided to deliver discrete quantities of liquid to the liquid drop supporting surface subsequent to a pendant drop having been formed.

17. A liquid drop forming device as claimed in any preceding claim wherein a surface coating is applied to the drop support surface.

18. A liquid drop forming device as claimed in any preceding claim in which the device incorporates a drop stimulator.

19. A liquid drop forming device as claimed in Claim 18 wherein the drop stimulator is a vibrator.

20. A liquid drop forming device as claimed in Claim 19 wherein the vibrator includes a rod for projection into a drop.

21. A liquid drop forming device as claimed in Claim 18 in which the drop stimulator is an electrical charge generator.

22. A liquid drop forming device as claimed in Claim 18 wherein the drop stimulator is a magnetic field.

23. A liquid drop forming device as claimed in Claim 18 in which means is provided to rotate the body member.

Fig.1

Fig. 2

Fig. 3

Fig. 7

Fig. 4

Fig. 5

51

52

82

80

82

27

*Fig.10*

A

B

A

*Fig.6(a)*

A

B2

B1

B3

B4

A

*Fig.6(b)*

Fig.8

Fig.9

Fig. 11

Fig. 13

*Fig.12*

*Fig.14*

Fig. 15

Fig. 16

Fig. 17

Fig. 19

Fig.18

Fig.20

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 105 034 (WESTINGHOUSE ELECTRIC CORP.) * Pages 1-2 * --- | 1,6 | G 01 N 21/17 B 01 L 3/02 |
| A | REVIEW OF SCIENTIFIC INSTRUMENTS, vol. 49, no. 8, August 1978, pages 1090-1092, American Institute of Physics; N. ABUAF et al.: "Optical probe for local void fraction and interface velocity measurements" * Pages 1091-1092 * --- | 1,5,8,9 | |
| A | EP-A-0 144 928 (HOECHST AG) * Pages 1-2 * --- | 1 | |
| P,A D | EP-A-0 286 419 (N. McMILLAN) * Columns 1-4 * ----- | 1-3,5, 18 | |
| | | | TECHNICAL FIELDS SEARCHED (Int. Cl.5) |
| | | | G 01 N 21/17 G 01 N 21/25 G 01 N 21/43 G 01 N 21/85 B 01 L 3/02 G 01 N 11/00 G 01 N 13/02 G 01 W 1/14 |

The present search report has been drawn up for all claims

| Place of search | Date of completion of the search | Examiner |
|---|---|---|
| THE HAGUE | 18-01-1990 | BOEHM CH.E.D. |

EPO FORM 1503 03.82 (P0401)